# FASCICULE DE BREVET EUROPEEN

(11) **EP 1 110 649 B1**
(45) Date de publication et mention de la délivrance du brevet: **01.09.2004**
(21) Numéro de dépôt: 00460058.1
(22) Date de dépôt: 02.11.2000
(51) Int. Cl.: B23D 45/06, B23D 59/02, B28D 1/04

(54) **Dispositif de tronçonnage de pièces comme des carreaux**
Apparatus for cutting workpieces such as tiles
Vorrichtung zum Schneiden von Werkstücken wie Fliesen

(30) Priorité: 05.11.1999 FR 9914029; 25.02.2000 FR 0002368
(43) Date de publication de la demande: 27.06.2001
(73) Titulaire: DIAMANT BOART Société Anonyme, 1190 Bruxelles (BE)
(72) Inventeur: Petit, Marc, 41260 La Chaussee St.-Victor (FR)
(74) Mandataire: Maillet, Alain

(56) Documents cités:
- EP-A- 0 253 032
- EP-A- 0 570 042
- DE-U- 29 801 127
- FR-A- 1 363 254

## Description

La présente invention concerne un dispositif de tronçonnage selon le préambule de la revendication 1 (voir par exemple EP-A-0 253 032). Elle concerne plus particulièrement un dispositif pour tronçonner les carreaux, par exemple les carreaux de faïence ou de grès utilisés notamment dans le domaine de la construction.

Est bien connu le fait d'utiliser pour tronçonner des carreaux un dispositif de tronçonnage constitué d'un bâti à plateau, par exemple un établi, adapté à recevoir les pièces à tronçonner, lesquelles peuvent glisser sur ce plateau, et d'un bloc de tronçonnage qui intervient en dessous de ce plateau, ce bloc de tronçonnage comprenant un moteur et un organe de tronçonnage tel qu'un disque de tronçonnage dont une portion peut passer à travers une lumière ménagée dans le plateau pour venir en contact avec la pièce à tronçonner.

Est également bien connu le fait d'installer sur le bloc de tronçonnage une enceinte qui définit un compartiment ouvert vers le haut susceptible de contenir un fluide d'humidification de l'organe de tronçonnage. Toute une partie inférieure de l'organe de tronçonnage est contenue dans ce compartiment et baigne donc dans le fluide d'humidification.

Il est souhaitable de pouvoir faire basculer le bloc de tronçonnage afin de modifier l'orientation de l'organe de tronçonnage, par exemple pour obtenir des coupes en biais. Se pose alors le problème du maintien de la partie inférieure de l'organe de tronçonnage dans le bain de fluide d'humidification.

Il est également souhaitable de ménager un dispositif de guidage afin de permettre un glissement des pièces à tronçonner rectiligne sur le plateau. Un tel dispositif est particulièrement important lorsque l'on veut réaliser des coupes en biais, pour lesquelles il est particulièrement difficile de réaliser une coupe droite au jugé. Ont été déjà proposées des réglettes coulissantes contre lesquelles les pièces peuvent prendre appui. De tels dispositifs sont difficilement adaptables aux supports déjà existants. En outre, ils ne permettent pas d'assurer un guidage suffisamment précis.

La présente invention vise à apporter des perfectionnements aux dispositifs de tronçonnage de carreaux à organe de tronçonnage inclinable de manière à résoudre les problèmes que l'on vient d'évoquer.

A cet effet, la présente invention propose un dispositif de tronçonnage de pièces comme des carreaux, comprenant un bâti dont une partie supérieure définit un plateau sur lequel des pièces à tronçonner peuvent glisser et un bloc de tronçonnage qui intervient en dessous dudit plateau, ledit bloc de tronçonnage, monté pivotant sur ledit bâti, comprenant un moteur et un organe de tronçonnage dont une partie supérieure passe à travers une lumière ménagée dans ledit plateau pour venir en contact avec la pièce à tronçonner, ledit dispositif de tronçonnage comprenant en outre une enceinte définissant un compartiment ouvert vers le haut qui contient un fluide d'humidification dans lequel baigne une partie inférieure de l'organe de tronçonnage, caractérisé en ce que ladite enceinte est suspendue d'une part audit bloc de tronçonnage et d'autre part audit bâti au moyen d'un support articulé formant un quadrilatère, tel qu'un parallélogramme, déformable dont un premier sommet fixe coïncide avec l'axe d'articulation dudit bloc de tronçonnage, un second sommet fixe se trouve sur ledit bâti aligné horizontalement avec ledit premier sommet fixe, un premier sommet mobile se déplace avec une partie inférieure dudit bloc de tronçonnage et un second mobile se trouve sur ladite enceinte alignée horizontalement avec ledit premier sommet mobile.

De la sorte, ladite enceinte se déplace avec la partie inférieure du bloc de tronçonnage mais elle ne s'incline pas et reste à l'horizontale. Ainsi, l'organe de tronçonnage peut être maintenu baignant dans le fluide d'humidification quelle que soit l'orientation qu'on lui donne.

Selon un autre aspect de la présente invention, ledit premier sommet fixe du support articulé, c'est-à-dire l'axe d'articulation du bloc de tronçonnage, et ledit premier sommet mobile de ce support, c'est-à-dire celui qui se déplace avec ledit bloc de tronçonnage, se trouvent dans le plan dudit organe de tronçonnage.

La hauteur d'eau entre l'extrémité inférieure de l'organe de tronçonnage et le fond du compartiment contenant le fluide d'humidification est constante, ce qui garantit la qualité de l'arrosage par barbotage.

Avantageusement, ladite enceinte est solidarisée par une liaison pivot audit bloc de tronçonnage et est suspendue par l'intermédiaire de biellettes articulées audit bâti.

Selon un autre aspect de la présente invention ladite enceinte est montée de manière amovible sur ledit bâti et sur ledit bloc de tronçonnage.

De la sorte, le remplissage et le nettoyage du compartiment contenant le fluide d'humidification sont facilités.

Avantageusement, ladite enceinte est fixée sur ledit support articulé au moyen de tétons ménagés sur ladite enceinte coopérant avec des logements ménagés sur ledit support articulé, chacun desdits logements ayant une forme allongée définissant, de part et d'autre d'un coude une extrémité fermée formant appui pour le téton correspondant et une extrémité ouverte permettant la libération dudit téton.

Selon un autre aspect de la présente invention, une enceinte de protection, ouverte en haut et en bas, est montée amovible sur le bloc de tronçonnage afin d'entourer une partie dudit organe de tronçonnage afin de former écran retenant les projections de fluide d'humidification et les redirigeant vers ledit compartiment contenant le fluide d'humidification.

Selon un autre aspect de la présente invention, ledit plateau comprend des rainures s'étendant parallèlement, à intervalle régulier, dans la direction de tronçonnage, et un moyen de guidage de tronçonnage comprenant une face contre laquelle une pièce à tronçonner peut venir en appui est installé dans l'une desdites rainures.

Les plateaux de tronçonnage habituellement utilisés dans les dispositifs de tronçonnage de carreaux connus comprennent généralement de telles rainures servant à faciliter l'évacuation des déchets de tronçonnage. La présente invention met à profit l'existence de ces rainures pour installer un guide de tronçonnage contre lequel une pièce à tronçonner peut venir en appui.

Selon un autre aspect de la présente invention, ledit moyen de guidage de tronçonnage comprend un premier corps allongé adapté à être fixé le long d'une desdites rainures et un second corps allongé comprenant une face contre laquelle une pièce à tronçonner peut venir en appui, lesdits premier et second corps étant reliés par deux biellettes articulées parallèles.

De la sorte, les deux corps et les deux biellettes définissent un parallélogramme déformable, ce qui permet de faire varier l'écartement entre les deux corps tout en les maintenant parallèles.

Avantageusement, la longueur des biellettes est telle que l'amplitude d'écartement entre lesdits premier et second corps correspond au moins à la distance entre deux rainures.

Avantageusement, ledit premier corps est fixé dans une desdites rainures par l'intermédiaire d'un moyen de pince enclipsable et de plots de positionnement.

Avantageusement, l'ensemble formé par lesdits premier et second corps et par lesdites biellettes est maintenu dans une position donnée au moyen de vis papillons.

Selon un autre aspect de la présente invention, ledit dispositif de tronçonnage est monté sur un châssis d'une table comportant un plateau, pourvu d'au moins une paire de dispositifs de clipsage prévus pour rendre amovible le plateau par rapport au châssis, chaque dispositif de clipsage étant constitué d'une gâche montée à coulissement dans un palier formé dans la face inférieure du plateau de manière à ce que ladite gâche puisse prendre toutes les positions entre une position de verrouillage où une extrémité libre de ladite gâche puisse faire saillie d'une face d'extrémité du palier pour se loger respectivement dans un orifice d'une patte formée dans la partie supérieure dudit châssis, et une position de déverrouillage où ladite extrémité libre est rétractée dans la face d'extrémité dudit palier.

Selon un autre aspect de la présente invention, les plans formés par les faces d'extrémité et les pattes se coupent en une génératrice située dans un plan médian du châssis lorsque le plateau est assemblé avec le châssis.

Selon un autre aspect de la présente invention, la gâche est maintenue dans sa position de verrouillage par un ressort logé dans un embrèvement du palier et agissant sur une butée de ladite gâche.

Selon un autre aspect de la présente invention, la gâche est positionnée en rotation dans le palier par une goupille montée radialement dans ladite gâche et prévue pour coulisser dans une rainure longitudinale du palier.

Selon un autre aspect de la présente invention, des guides sont formés respectivement sur la face inférieure du plateau afin de permettre le centrage du plateau dans le châssis lors de son assemblage dans ledit châssis, chaque guide étant constitué d'une plaque dont l'un des champs sert de butée de centrage à l'une des deux parois latérales du châssis.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue schématique en perspective d'une partie inférieure d'un dispositif de tronçonnage selon l'invention dont le bloc de tronçonnage est à la verticale,
la Fig. 2 est une vue schématique en perspective de la partie du dispositif de tronçonnage de la Fig. 1, le bloc de tronçonnage étant incliné à 45°,
la Fig. 3 est une vue schématique en perspective montrant le dispositif de fixation d'enceinte du dispositif de tronçonnage de la Fig. 1,
la Fig. 4 est une vue schématique en perspective montrant une partie supérieure du dispositif de tronçonnage de la Fig. 1,
les Figs. 5 et 6 sont des vues qui montrent schématiquement le fonctionnement du dispositif de tronçonnage selon la présente invention,
la Fig. 7 est une vue en coupe d'une table dont le châssis supporte un plateau amovible représenté dans une position verrouillée selon la présente invention,
la Fig. 8 est une vue en perspective d'une table et d'un plateau amovible en cours de montage ou de démontage selon la présente invention, et
la Fig. 9 est une vue en coupe d'une table dont le châssis supporte un plateau amovible représenté dans une position déverrouillée selon la présente invention.

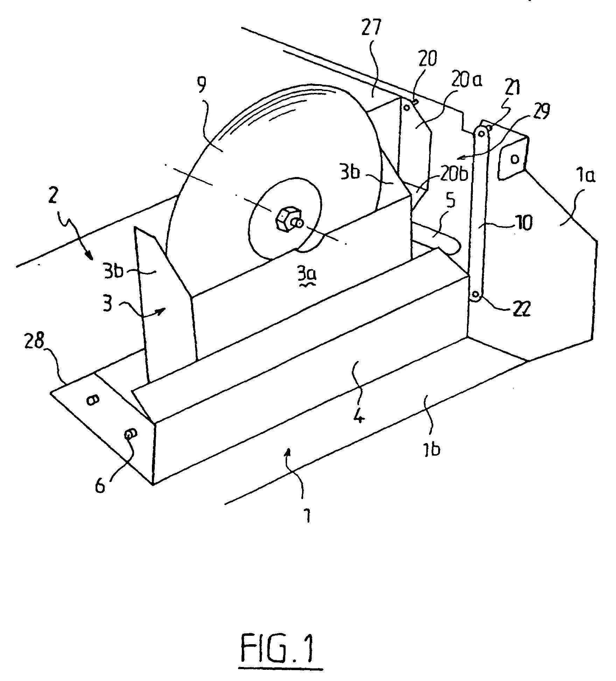

En référence aux Figs. 1 à 4, un dispositif de tronçonnage de carreaux selon un mode de réalisation de l'invention comprend globalement un bâti 1 dont une partie supérieure définit un plateau 11 sur lequel des pièces à tronçonner peuvent glisser et dont une partie inférieure porte un bloc de tronçonnage 2 qui intervient en dessous du plateau. Il comporte également une enceinte 4 formant compartiment contenant un fluide d'humidification, ici de l'eau, et un support articulé 29 permettant la solidarisation de l'enceinte 4 à l'intérieur du bâti 1.

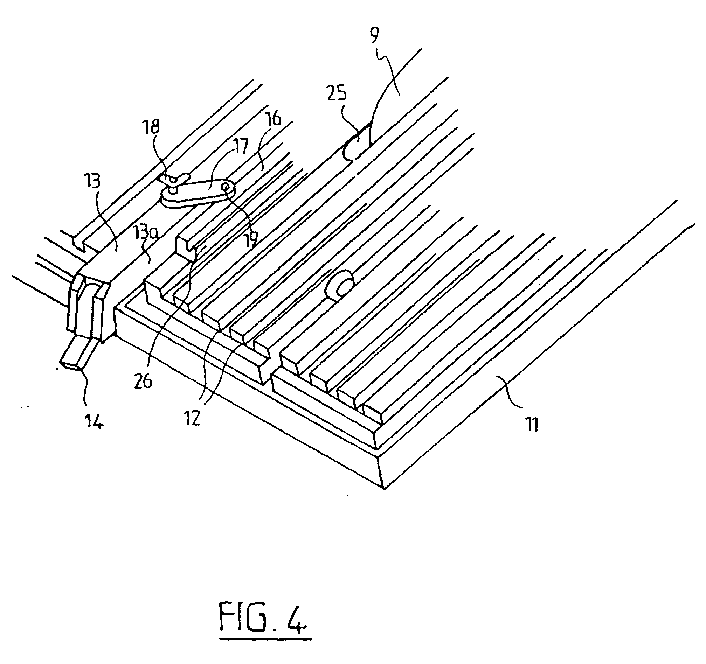

La partie inférieure du bâti est mieux représentée sur les Figs. 1 à 3, tandis que la partie supérieure du bâti est mieux représentée sur la Fig. 4. Globalement, le bâti 1 comporte une jupe de forme généralement parallélépipédique ayant deux parois latérales parallèles la reliées par une plaque formant fond 1b et reposant, par exemple, sur des pieds (non représentés). Le tout est coiffé par le plateau 11.

Comme on le voit sur les Figs. 1 à 3, le bloc de tronçonnage 2 comprend un caisson 27, un moteur et son dispositif d'alimentation (non représentés), un organe de tronçonnage 9, et une enceinte de protection 3.

Le moteur est installé dans le caisson 27 de forme généralement parallélépipédique comportant une ouverture à travers laquelle passe l'arbre d'entraînement de l'organe de tronçonnage 9.

L'organe de tronçonnage est ici un disque de tronçonnage 9 dont, comme on peut le voir sur la Fig. 4, une partie supérieure passe à travers une lumière 25 ménagée dans ledit plateau 11 pour venir en contact avec la pièce à tronçonner.

L'enceinte de protection 3 est constituée d'une plaque frontale 3a et de deux plaques latérales 3b pourvues de moyens de fixation amovibles sur le caisson 27. Lorsqu'elle est fixée sur le caisson 27, cette enceinte, ouverte en haut et en bas, entoure une grande partie de l'organe de tronçonnage 9 et forme écran de protection retenant les projections d'eau et les redirigeant dans l'enceinte 3.

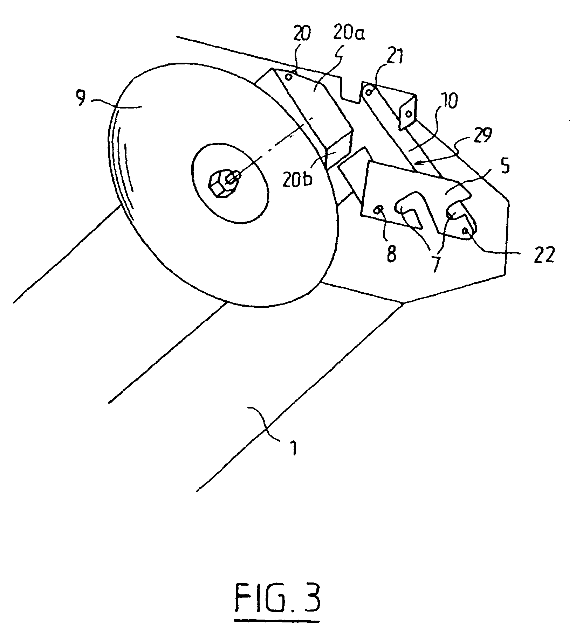

Le caisson 27 est monté pivotant dans le bâti 1 au moyen d'articulations 20 ménagées au niveau de l'une et de l'autre parois latérales 1a du bâti 1, comme on le voit sur la Fig. 3. L'axe d'articulation 20 intervient dans une partie supérieure du bâti 1, proche du plateau 11. Il se trouve dans le plan du disque de tronçonnage 9 qu'il coupe à la limite de son extrémité supérieure traversant la lumière 25. C'est donc sensiblement autour de sa zone d'intersection avec le plateau 11 que le disque de tronçonnage 9 va pouvoir basculer. Ainsi peut être modifiée l'inclinaison du disque de tronçonnage par rapport au plateau 11.

Comme on le voit sur les Figs. I à 3, les axes d'articulation 20 sont portés par des flasques 20a s'étendant du caisson parallèlement aux parois latérales du bâti 1. Ces flasques 20a sont recourbées dans leurs parties inférieures en 20b afin de rediriger d'éventuelles projections d'eau vers l'enceinte 4.

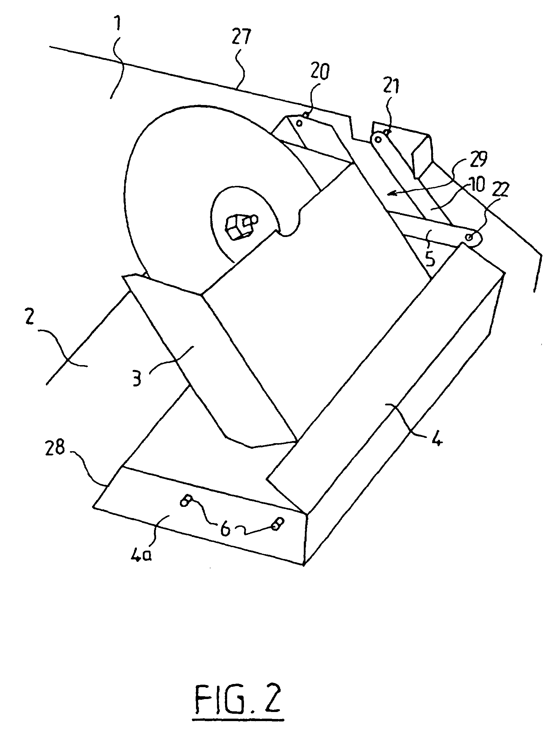

Le caisson 27 peut basculer entre une première position, représentée sur la Fig. 1, dans laquelle le disque de tronçonnage 9 s'étend à la verticale, et une seconde position, représentée sur la Fig. 2, dans laquelle le disque de tronçonnage 9 est incliné à 45° par rapport à la verticale. Le caisson 27 peut être immobilisé dans toute position angulaire comprise entre ces deux positions extrêmes par tous moyens connus appropriés.

L'enceinte 4 est un caisson de forme généralement rectangulaire ouvert vers le haut, un côté arrière 28, en regard du caisson 27, étant incliné à 45°, comme on le voit sur les Figs. 1 et 2. Cette enceinte 4 définit un compartiment ouvert vers le haut qui contient de l'eau dans laquelle doit baigner une partie inférieure du disque de tronçonnage 9.

Selon l'invention, cette enceinte 4 est suspendue, d'une part, au bloc de tronçonnage 2 et, d'autre part, au bâti 1 au moyen de support articulé 29 formant un quadrilatère déformable, avantageusement un parallélogramme déformable.

Plus précisément, le moyen de support articulé 29 comprend des plaques 5 d'accrochage et des biellettes 10 de suspension intervenant sur l'une et l'autre parois latérales la du bâti 1. La plaque d'accrochage 5 est constituée d'un flasque de forme globalement rectangulaire dont une extrémité est montée en liaison pivot sur la paroi latérale 1a du bâti 1, au moyen d'une articulation 8 comme on le voit sur la Fig. 3. Son autre extrémité est en liaison pivot avec la partie inférieure de la biellette 10 correspondante, au moyen d'une articulation 22. L'autre extrémité de la biellette 10 est montée pivotante sur la paroi latérale la correspondante du bâti 1, au niveau de la partie supérieure de cette dernière, au moyen d'une articulation 21. Les articulations 8, 20, 21, 22 forment les sommets d'un quadrilatère qui est déformable.

Selon un mode de réalisation préféré, la biellette 20 et les pivots 8 et 22 sont tels que l'articulation 21 et l'articulation 20 définissent une droite qui est sensiblement parallèle à celle qui est définie par les pivots 8 et 22. De plus, les distances qui séparent les articulations 20 et 21, d'une part, et 8 et 22, d'autre part, sont égales. Ainsi, les articulations 8, 20, 21, 22 forment les sommets d'un parallélogramme qui est déformable.

Selon une autre caractéristique avantageuse, les axes de l'articulation 8 entre la plaque 5 et le bâti 1 et de l'articulation 20 entre le bâti 1 et le caisson 27 se trouvent avantageusement dans le plan du disque de tronçonnage 9. De plus, afin que l'organe de tronçonnage 9 baigne toujours dans une même hauteur de liquide de lubrification quelle que soit son inclinaison, l'axe de l'articulation 8 est prévu pour être tangent à la périphérie de l'organe de tronçonnage 9.

Comme on le voit sur les Figs. 1 et 2, des tétons 6 sont ménagés sur l'extérieur de chacune des parois latérales 4a de l'enceinte 4. Ces tétons 6 sont adaptés à venir se loger dans des logements respectifs 7 ménagés sur la plaque d'accrochage 5 correspondante. En pratique, ces logements 7 sont des rainures coudées, comme on le voit sur la Fig. 3. Une extrémité ouverte de ces rainures permet l'introduction du téton 6 correspondant. La rainure est inclinée vers le haut depuis cette extrémité ouverte jusqu'au coude, puis elle est inclinée vers le bas, jusqu'à une extrémité fermée contre laquelle le téton 6 peut prendre appui. De la sorte est mis en place un moyen d'accrochage amovible de l'enceinte 4 sur le support articulé 29. Pour décrocher l'enceinte 4, il suffit de la soulever tout en l'éloignant du caisson 27, afin de mener les tétons jusqu'aux coudes des rainures, puis de la tirer à nouveau vers le bas.

Lorsqu'elle est accrochée sur le support articulé 29, l'enceinte 4 est solidarisée à la fois au bâti 1 et au caisson 27 par l'intermédiaire d'un parallélogramme déformable dont un premier sommet fixe coïncide avec l'axe d'articulation 20 du bloc de tronçonnage, un second sommet fixe, l'articulation 21, se trouve sur ledit bâti aligné horizontalement avec le premier sommet fixe, un premier sommet mobile, l'articulation 8, se déplace avec une partie inférieure du bloc de tronçonnage et un second sommet mobile, l'articulation 22 se trouve sur ladite enceinte alignée horizontalement avec ledit premier sommet mobile.

Comme on le voit sur la Fig. 4, le plateau 11 comprend, sur sa surface supérieure, des rainures 12 qui s'étendent parallèlement, à intervalle régulier, dans la direction de tronçonnage.

Selon l'invention, un moyen de guidage de tronçonnage comprend un premier corps allongé 13 adapté à être fixé le long d'une des rainures 12, un second corps allongé 16 comprenant une face 26 contre laquelle une pièce à tronçonner peut venir en appui, et des biellettes articulées 17 parallèles qui relient ces deux corps 13 et 16.

Le premier corps 13 est un profilé dont la longueur correspond sensiblement à celle du plateau 11. Les deux parois latérales 13a de ce profilé 13 s'étendent parallèlement aux rainures 12. Des plots de positionnement (non représentés) sont ménagés le long de ce profilé parallèlement à sa paroi 13. Ce premier corps 13 est donc disposé sur une portion de plateau 11 se trouvant entre deux rainures 12, les plots de positionnement venant porter contre les bords de cette portion de plateau qui correspondent aux parois des rainures qui la bordent.

Les extrémités de ce corps 13 sont coudées vers le bas afin de venir porter contre les rebords du plateau 11. Au niveau de ces extrémités coudées, l'espace entre les parois latérales est dégagé afin de pouvoir introduire une pince élastique 14. Cette pince 14 est prévue afin de permettre une fixation du corps 13 par enclipsage sur le plateau 11. Elle comporte également un levier permettant sa manipulation.

Le second corps 16 est un profilé en U ouvert vers le haut dont une paroi 26 s'étend verticalement et est adaptée à venir en appui contre une pièce à tronçonner.

Les corps 16 et 13 sont reliés par deux biellettes 17 (une seule est visible à la Fig. 4), de longueurs identiques, montées pivotantes à chacune de leurs extrémités sur l'un et l'autre corps de manière que l'ensemble constitué par les deux corps 13 et 16 et par les biellettes 17 forme un parallélogramme déformable. Le second corps 16 va donc s'étendre parallèlement au premier corps 13, c'est-à-dire dans la direction de tronçonnage parfaitement définie par la mise en place précise du corps 13.

La longueur des biellettes 17 est telle que l'espace entre deux rainures 12 du plateau 11 peut être couvert par le déplacement du second corps 16 par déformation du parallélogramme constitué par les deux corps 13 et 16 et les biellettes 17.

Les articulations reliant le corps 13 et les biellettes 17 peuvent être immobilisées à l'aide de vis papillons 18, permettant de bloquer le parallélogramme constitué par les deux corps 13 et 16 et les biellettes 17 dans une position donnée. Quant aux articulations 19 reliant les biellettes 17 au corps 16, elles sont fixes.

Avantageusement, le plateau 11 est monté amovible sur le bâti 1, afin de faciliter son nettoyage.

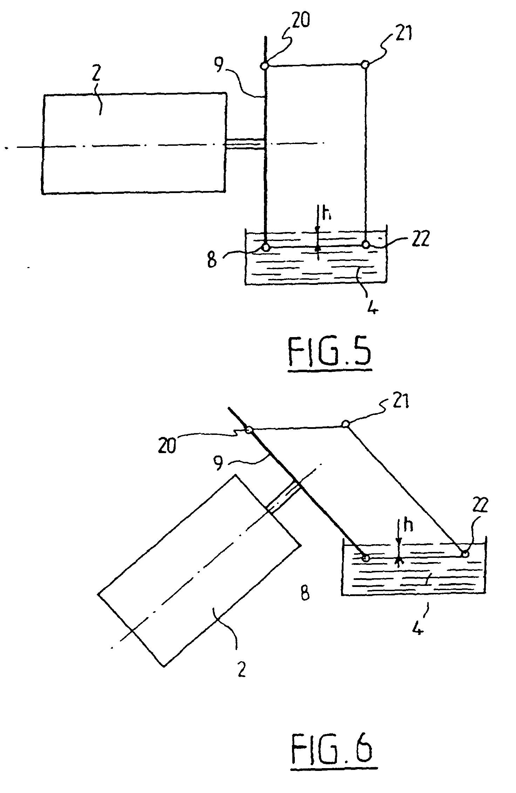

Les Figs. 5 et 6 montrent de manière schématique le fonctionnement d'un dispositif de tronçonnage selon la présente invention.

La Fig. 5 représente le bloc de tronçonnage 2 non incliné, c'est-à-dire dans la position dans laquelle le disque de tronçonnage 9 s'étend à la verticale. Dans cette position, une partie inférieure du disque de tronçonnage 9 se trouve baignée dans une hauteur h d'eau.

Lorsque l'on incline le bloc de tronçonnage, ainsi que cela est représenté dans la Fig. 6, l'enceinte 4 se déplace avec l'extrémité inférieure du disque 9 du fait de l'articulation 8 qui relie l'enceinte 4 et le bloc de tronçonnage 2, l'axe de cette articulation étant dans le plan du disque 9 et étant tangeant à l'extrémité inférieure de ce disque 9. Du fait de la déformation du parallélogramme constitué par les articulations 20, 21, 22 et 8, l'enceinte se déplace à l'horizontale, ce qui fait que le niveau d'eau reste constant dans l'enceinte. Le disque 9 reste baigné dans une même hauteur h d'eau, la surface immergée du disque étant alors légèrement supérieure à la surface immergée dans la position verticale du disque 9 telle que représentée sur la Fig. 5.

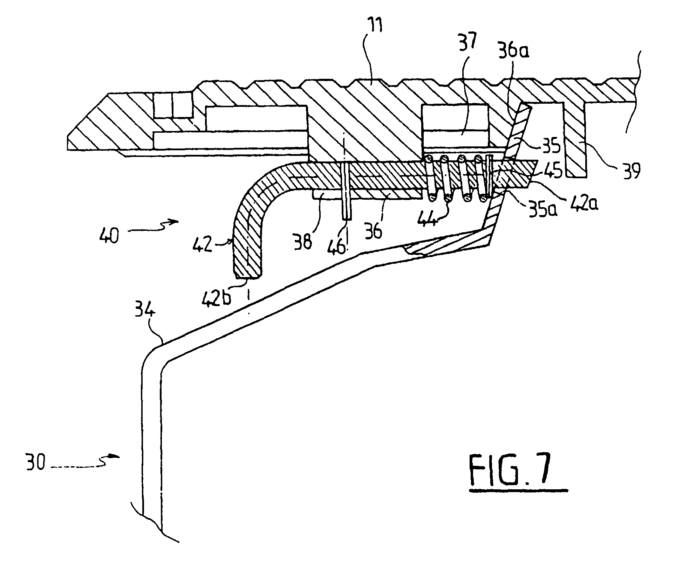

Dans une variante de réalisation représentée à la Fig. 7, le plateau 11 est monté de manière amovible par rapport à un châssis 34. A cet effet, le plateau 11 comporte au moins deux dispositifs de clipsage 40 permettant l'assemblage dudit plateau 11 au châssis 34 de la table 30.

Les dispositifs de clipsage 40 sont montés par paires sur la face inférieure du plateau 11 et de manière symétrique par rapport un plan médian de la table 30.

Dans un mode préféré de réalisation, deux paires de dispositifs de clipsage 40 sont utilisées pour assembler le plateau 11 au châssis 34.

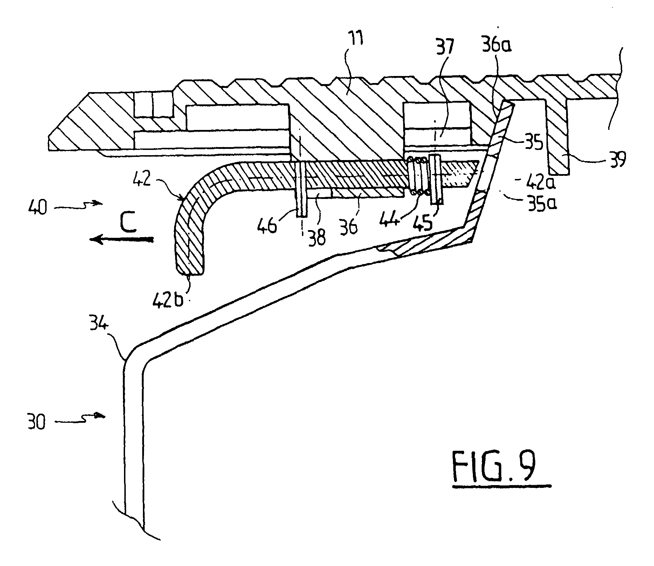

A la Fig. 7, un seul dispositif de clipsage 40 est visible. Il est constitué d'une gâche 42 montée à coulissement dans un palier 36 formé dans la face inférieure du plateau 11. La gâche 42 peut ainsi prendre toutes les positions entre une position de verrouillage où son extrémité libre 42a biseautée fait saillie sur une face inclinée 36a du palier 36 et une position de déverrouillage, représentée à la Fig. 9, où son extrémité libre 42a est rétractée de la face inclinée 36a dudit palier 36.

A la Fig. 7, la gâche 42 est maintenue en position de verrouillage à l'encontre d'un ressort 44 logé dans un embrèvement 37 réalisé dans le palier 36 prenant appui sur une face de l'embrèvement 37 et agissant sur une butée 45 de ladite gâche 42.

Dans un mode préféré de réalisation, la butée 45 est une première goupille montée radialement dans ladite gâche 42.

Une seconde goupille 46 est montée également radialement dans la gâche 42 et peut coulisser dans une rainure longitudinale 38 du palier 36 de manière à interdire la rotation de la gâche 42 autour de son axe.

L'autre extrémité 42b de la gâche 42 est recourbée pour permettre sa manoeuvre.

Le châssis 34 comporte dans sa partie supérieure destinée à supporter le plateau 11, des pattes 35 inclinées par rapport au plan supérieur dudit châssis 34, de manière à ce qu'elle puisse épouser respectivement les faces inclinées 36a des paliers 36 du plateau 11 lorsque le plateau 11 est assemblé au châssis 34.

Dans un mode préféré de réalisation, les plans formés par les faces d'extrémité 36a et les pattes 35 se coupent en une génératrice située dans un plan médian du châssis 34 lorsque le plateau 11 est assemblé avec le châssis 34.

Chaque patte 35 comprend un orifice 35a pouvant recevoir une extrémité libre 42a d'une gâche 42 en position de verrouillage lorsque le plateau 11 repose sur le châssis 34 afin de permettre l'assemblage du plateau 11 au châssis 34.

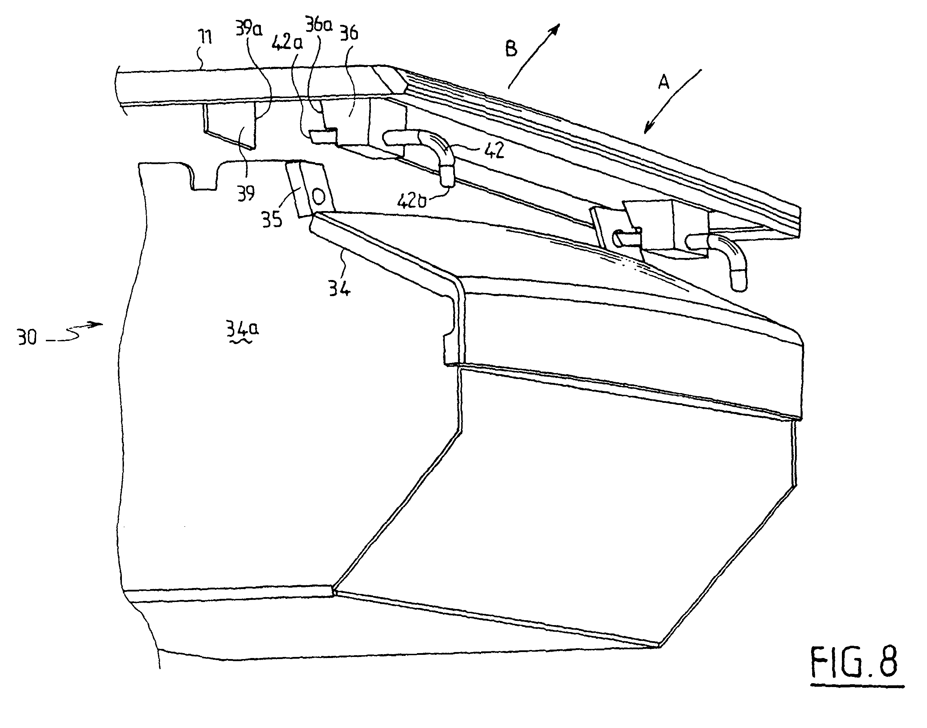

Des guides 39 sont formés respectivement sur la face inférieure du plateau 11 afin de permettre le centrage du plateau 11 dans le châssis 24 lors de son assemblage. Chaque guide 39 est constitué d'une plaque dont l'un des champ 39a sert de butée de centrage à l'une des deux parois latérales 34a et 34b du châssis 34. A la Fig. 8, seule la paroi 34a est visible.

Le plateau 11 est présenté sur le châssis 34 suivant une direction indiquée par la flèche A à la Fig. 8. Les guides 39 permettent de positionner le plateau 11 sur le châssis 34.

Les pattes inclinées 35 viennent alors en contact avec les extrémités libres biseautées 42a des gâches 42 qui quittent leur position de verrouillage et coulissent dans le palier 36.

Lorsque les pattes 35 entrent en contact avec les faces inclinées 36a des paliers 36 du plateau 11, les extrémités libres 42a des gâches 42 pénètrent dans respectivement les orifices 35a des pattes 35 pour se positionner dans leurs positions de verrouillage, comme le montre la Fig. 7.

A la Fig. 9, lorsque l'on souhaite démonter le plateau 11 de la table 30, il faut dans un premier temps, tirer sur les extrémités recourbées 42b d'une paire de gâches 42 symétriques, disposées dans un plan médian de la table 30 suivant une direction indiquée par la flèche C à cette Fig. Les extrémités libres 42a se retirent alors respectivement des orifices 35a des pattes 35 et permettent le déblocage d'un premier côté dudit plateau 11.

Ce premier côté doit alors être soulevé, comme le montre la Fig. 8, pour que les pattes 35 quittent les faces inclinées 36a des paliers 36 du châssis 34, puis, dans un second temps, il faut tirer sur les extrémités libres 42a de l'autre paire de gâches 42 pour permettre le déblocage, de la même manière, d'un second côté dudit plateau 11 opposé au premier côté.

Le plateau 11 peut alors être désolidarisé du châssis 34 de la table 30 suivant une direction indiquée par la flèche B à la Fig. 8.

## Revendications

1. Dispositif de tronçonnage de pièces comme des carreaux, comprenant un bâti (1) dont une partie supérieure définit un plateau (11) sur lequel des pièces à tronçonner peuvent glisser et un bloc de tronçonnage (2) qui intervient en dessous dudit plateau, ledit bloc de tronçonnage, monté pivotant sur ledit bâti, comprenant un moteur et un organe de tronçonnage (9) dont une partie supérieure passe à travers une lumière (25) ménagée dans ledit plateau pour venir en contact avec la pièce à tronçonner, ledit dispositif de tronçonnage comprenant en outre une enceinte (4) définissant un compartiment ouvert vers le haut qui contient un fluide d'humidification dans lequel baigne une partie inférieure dudit organe de tronçonnage (9), **caractérisé en ce que** ladite enceinte (4) est suspendue, d'une part, audit bloc de tronçonnage (2) et, d'autre part, audit bâti (1) au moyen d'un support articulé (29) formant un quadrilatère déformable dont un premier sommet fixe (20) coïncide avec l'axe d'articulation dudit bloc de tronçonnage (2), un second sommet fixe (21) se trouve sur ledit bâti aligné horizontalement avec ledit premier sommet fixe (20), un premier sommet mobile (8) se déplace avec une partie inférieure dudit bloc de tronçonnage (2) et un second sommet mobile (22) se trouve sur ladite enceinte alignée horizontalement avec ledit premier sommet mobile.

2. Dispositif de tronçonnage selon la revendication 1, **caractérisé en ce que** ledit quadrilatère est un parallélogramme.

3. Dispositif de tronçonnage selon la revendication 1 ou 2, **caractérisé en ce que** ledit premier sommet fixe (20) et ledit premier sommet mobile (8) dudit support articulé (29) se trouvent dans le plan dudit organe de tronçonnage (9).

4. Dispositif de tronçonnage selon la revendication 3, **caractérisé en ce que** l'axe de pivotement du premier sommet mobile (8) est tangent à la périphérie de l'organe de tronçonnage (9).

5. Dispositif de tronçonnage selon une des revendications précédentes, **caractérisé en ce que** ladite enceinte (4) est solidarisée par une liaison pivot (8) audit bloc de tronçonnage (2) et est suspendue par l'intermédiaire de biellettes articulées (10) au dit bâti (1).

6. Dispositif de tronçonnage selon l'une quelconque des revendications précédentes, **caractérisé en ce que** ladite enceinte (4) est montée de manière amovible sur ledit bâti (1) et sur ledit bloc de tronçonnage (2).

7. Dispositif de tronçonnage selon l'une quelconque des revendications précédentes, **caractérisé en ce que** ladite enceinte (4) est fixée sur ledit support articulé (29) au moyen de tétons (6) ménagés sur ladite enceinte (4) coopérant avec des logements (7) ménagés sur ledit support articulé, chacun desdits logements ayant une forme allongée définissant, de part et d'autre d'un coude une extrémité fermée formant appui pour le téton correspondant et une extrémité ouverte permettant la libération dudit téton.

8. Dispositif de tronçonnage selon l'une quelconque des revendications précédentes, **caractérisé en ce qu'**il comprend en outre une enceinte de protection (3), ouverte en haut et en bas, montée amovible sur ledit bloc de tronçonnage (2) afin d'entourer une partie dudit organe de tronçonnage (9) afin de former écran retenant les projections de fluide d'humidification et les redirigeant vers ledit compartiment contenant le fluide d'humidification.

9. Dispositif de tronçonnage selon l'une quelconque des revendications précédentes, **caractérisé en ce que** ledit plateau (11) comprend des rainures (12) s'étendant parallèlement, à intervalle régulier, dans la direction de tronçonnage, et un moyen de guidage de tronçonnage (13, 16, 17) comprenant une face (26) contre laquelle une pièce à tronçonner peut venir en appui est installé dans l'une desdites rainures.

10. Dispositif de tronçonnage selon la revendication 9, **caractérisé en ce que** ledit moyen de guidage de tronçonnage comprend un premier corps allongé (13) adapté à être fixé le long d'une desdites rainures (12) et un second corps allongé (16) comprenant une face (26) contre laquelle une pièce à tronçonner peut venir en appui, lesdits premier et second corps étant reliés par deux biellettes articulées (17) parallèles.

11. Dispositif de tronçonnage selon la revendication 10, **caractérisé en ce que** la longueur desdites (17) biellettes est telle que l'amplitude d'écartement entre lesdits premier (13) et second (16) corps correspond au moins à la distance entre deux rainures (12).

12. Dispositif de tronçonnage selon la revendication 10 ou 11, **caractérisé en ce que** ledit premier corps est fixé dans une desdites rainures par l'intermédiaire d'un moyen de pince enclipsable (14) et de plots de positionnement.

13. Dispositif de tronçonnage selon l'une quelconque des revendications 10 à 12, **caractérisé en ce que** l'ensemble formé par lesdits premier (13) et second (16) corps et par lesdites biellettes (17) est maintenu dans une position donnée au moyen de vis papillons (18).

14. Dispositif de tronçonnage selon l'une quelconque des revendications précédentes, ledit dispositif de tronçonnage étant monté sur un châssis (34) d'une table (30) comportant un plateau (11), **caractérisé en ce que** le plateau (11) est pourvu d'au moins une paire de dispositifs de clipsage (40) prévus pour rendre amovible le plateau (11) par rapport au châssis (34), chaque dispositif de clipsage (40) étant constitué d'une gâche (42) montée à coulissement dans un palier (36) formé dans la face inférieure du plateau (11) de manière à ce que ladite gâche (42) puisse prendre toutes les positions entre une position de verrouillage où une extrémité libre (42a) de ladite gâche (42) puisse faire saillie d'une face d'extrémité (36a) du palier (36) pour se loger respectivement dans un orifce (35a) d'une patte (35) formée dans la partie supérieure dudit châssis (34), et une position de déverrouillage où ladite extrémité libre (42a) est rétractée dans la face d'extrémité (36a) dudit palier (36).

15. Dispositif de tronçonnage selon la revendication précédente, **caractérisé en ce que** les plans formés par les faces d'extrémité (36a) et les pattes (35) se coupent en une génératrice située dans un plan médian du châssis (34) lorsque le plateau (11) est assemblé avec le châssis (34).

16. Dispositif de tronçonnage selon l'une des revendications 14 ou 15, **caractérisé en ce que** la gâche (42) est maintenue dans sa position de verrouillage par un ressort (44) logé dans un embrèvement (37) du palier et agissant sur une butée (45) de ladite gâche (42).

17. Dispositif de tronçonnage selon l'une des revendications 14 à 16, **caractérisé en ce que** la gâche (42) est positionnée en rotation dans le palier (36) par une goupille (46) montée radialement dans ladite gâche (42) et prévue pour coulisser dans une rainure longitudinale (38) du palier (36).

18. Dispositif de tronçonnage selon l'une des revendications 14 à 17, **caractérisé en ce que** des guides (39) sont formés respectivement sur la face inférieure du plateau (11) afin de permettre le centrage du plateau (11) dans le châssis (34) lors de son assemblage dans ledit châssis (34), chaque guide (39) étant constitué d'une plaque dont l'un des champ (39a) sert de butée de centrage à l'une des deux parois latérales (34a , 34b) du châssis (34).

## Patentansprüche

1. Vorrichtung zum Schneiden von Werkstücken wie Fliesen umfassend ein Rahmengestell (1), dessen oberer Teil eine Platte (11) definiert, auf der die zu schneidenden Werkstücke gleiten können und einen Schneidblock (2), welcher unter der Platte angeordnet ist, wobei der schwenkbar an dem Rahmengestell montierte Schneidblock einen Motor und ein Schneidwerkzeug (9) enthält, dessen oberer Teil durch ein in der Platte angeordnetes Langloch (25) hindurchtritt, um mit dem zu schneidenden Werkstück in Kontakt zu treten, wobei die Schneidvorrichtung außerdem eine Einfassung (4) umfasst, welche einen nach oben offenen Behälter definiert, der eine Befeuchtungsflüssigkeit enthält, in die ein unterer Teil des Schneidwerkzeugs (9) eintaucht, **dadurch gekennzeichnet, dass** die Einfassung (4) einerseits an dem Schneidblock (2) und andererseits an dem Rahmengestell (1) mittels eines gelenkigen Trägers (29) angehängt ist, wodurch ein verformbares Viereck gebildet wird, dessen erste feststehende Spitze (20) mit der Schwenkachse des Schneidblocks (2) koinzidiert, eine zweite feststehende Spitze (21) sich auf dem Rahmengestell horizontal ausgerichtet mit der ersten festen Spitze (20) befindet, eine erste bewegliche Spitze (8) sich mit einem unteren Teil des Schneidblocks (2) verschiebt und eine zweite bewegliche Spitze (22) sich auf der Einfassung horizontal ausgerichtet mit der ersten beweglichen Spitze befindet.

2. Schneidvorrichtung nach Anspruch 1, **dadurch gekennzeichnet, dass** das Viereck ein Parallelogramm ist.

3. Schneidvorrichtung nach Anspruch 1 oder 2, **dadurch gekennzeichnet, dass** die erste feststehende Spitze (20) und die erste bewegliche Spitze (8) des gelenkigen Trägers (29) sich in der Ebene des Schneidwerkzeugs (9) befinden.

4. Schneidvorrichtung nach Anspruch 3, **dadurch gekennzeichnet, dass** die Schwenkachse der ersten beweglichen Spitze (8) die Peripherie des Schneidwerkzeugs (9) tangiert.

5. Schneidvorrichtung nach einem der vorhergehenden Ansprüche, **dadurch gekennzeichnet, dass** die Einfassung (4) mittels einer Schwenkverbindung (8) mit dem Schneidblock (2) verbunden und mittels angelenkter Schwingarme (10) an das Rahmengestell (1) angehängt ist.

6. Schneidvorrichtung nach einem der vorhergehenden Ansprüche, **dadurch gekennzeichnet, dass** die Einfassung (4) lose und abnehmbar auf dem Rahmengestell (1) und auf dem Schneidblock (2) montiert ist.

7. Schneidvorrichtung nach einem der vorhergehenden Ansprüche, **dadurch gekennzeichnet, dass** die Einfassung (4) an dem gelenkigen Träger (29) mittels Ansätzen (6) befestigt ist, welche auf der Einfassung (4) angeordnet sind und mit Lagersitzen (7) kooperieren, welche auf dem gelenkigen Träger angeordnet sind, wobei jeder dieser Lagersitze eine längliche Form besitzt, welche auf der einen und anderen Seite einer Ausbuchtung ein geschlossenes Ende definieren, an dem der entsprechende Ansatz anliegt und ein offenes Ende, welches die Freigabe des Ansatzes gestattet.

8. Schneidvorrichtung nach einem der vorhergehenden Ansprüche, **dadurch gekennzeichnet, dass** sie außerdem eine oben und unten offene Schutzeinfassung (3) besitzt, welche lose und abnehmbar auf dem Schneidblock (2) montiert ist, um einen Teil des Schneidwerkzeugs (9) zu umgeben und eine Abschirmung zu bilden, welche die Abgabe von Befeuchtungsflüssigkeit zurückhält und diese wieder in den die Befeuchtungsflüssigkeit enthaltenden Behälter zurückführt.

9. Schneidvorrichtung nach einem der vorhergehenden Ansprüche, **dadurch gekennzeichnet, dass** die Platte (11) Nuten (12) aufweist, welche sich parallel und in regelmäßigen Abständen in Schneidrichtung erstrecken, sowie ein Mittel zur Führung des Schneidvorgangs (13, 16, 17), welches in eine der Nuten eingesetzt ist, mit einer Fläche (26), gegen die sich ein zu schneidendes Werkstück abstützen kann.

10. Schneidvorrichtung nach Anspruch 9, **dadurch gekennzeichnet, dass** das Mittel zur Führung des Schneidvorgangs einen ersten verlängerten Körper (13) umfasst, welcher so geformt ist, dass er entlang einer der Nuten (12) befestigt werden kann und einen zweiten verlängerten Körper (16) mit einer Fläche (26) umfasst, gegen den sich ein zu schneidendes Werkstück abstützen kann, wobei der erste und zweite Körper durch zwei parallele bewegliche Schwingarme (17) verbunden sind.

11. Schneidvorrichtung nach Anspruch 10, **dadurch gekennzeichnet, dass** die Länge der Schwingarme (17) so bemessen ist, dass die Amplitude des Abstands zwischen dem ersten (13) und zweiten (16) Körper wenigstens dem Abstand zwischen zwei Nuten (12) entspricht.

12. Schneidvorrichtung nach Anspruch 10 oder 11, **dadurch gekennzeichnet, dass** der erste Körper in einer der Nuten mittels einer einklinkbaren Klemme (14) und Haltestiften befestigt ist.

13. Schneidvorrichtung nach einem der vorhergehenden Ansprüche 10 bis 12, **dadurch gekennzeichnet, dass** die gesamte durch den ersten (13) und zweiten (16) Körper und die Schwingarme (17) gebildete Anordnung in einer Position gehalten wird, die durch die Flügelschrauben (18) bestimmt ist.

14. Schneidvorrichtung nach einem der vorhergehenden Ansprüche, wobei das Schneidwerkzeug auf einem Chassis (34) eines Tisches (30) mit einer Platte (11) montiert ist, **dadurch gekennzeichnet, dass** die Platte (11) mit mindestens einem Paar Klemmvorrichtungen (40) zur lösbaren Befestigung der Platte (11) an dem Chassis (34) versehen ist, wobei jede Klemmvorrichtung (40) aus einem Schließhaken (42) besteht, welcher gleitbar an einem in der unteren Fläche der Platte (11) gebildeten Lager (36) angeordnet ist, derart, dass der Schließhaken (42) alle Positionen zwischen einer Verriegelungsposition, bei der ein freies Ende (42a) des Schließhakens (42) aus einer Endfläche (36a) des Lagers (36) herausragen kann, um entsprechend in eine Öffnung (35a) einer im oberen Teil des Chassis (34) gebildeten Klaue (35) einzugreifen, und einer Entriegelungsposition, wo das freie Ende (42a) in die Endfläche (36a) des Lagers (36) zurückgezogen ist.

15. Schneidvorrichtung nach einem der vorhergehenden Ansprüche, **dadurch gekennzeichnet, dass** die von den Endflächen (36a) und den Klauen (35) gebildeten Ebenen sich in einer in der Mittelebene des Chassis (34) liegenden Erzeugenden schneiden, wenn die Platte (11) mit dem Chassis (34) verbunden wird.

16. Schneidvorrichtung nach einem der Ansprüche 14 oder 15, **dadurch gekennzeichnet, dass** der Schließhaken (42) durch eine in einer Ausnehmung (37) des Lagers angeordnete Feder (44) in seiner Verriegelungsposition gehalten wird, die auf einen Anschlag (45) des Schließhakens (42) einwirkt.

17. Schneidvorrichtung nach einem der Ansprüche 14 bis 16, **dadurch gekennzeichnet, dass** der Schließhaken (42) mittels eines radial in dem Schließhaken (42) angeordneten Stiftes (46) drehbar in dem Lager (36) und gleitbar in einer Längsausnehmung (38) des Lagers (36) angeordnet ist.

18. Schneidvorrichtung nach einem der Ansprüche 14 bis 17, **dadurch gekennzeichnet, dass** die Führungen (39) entsprechend auf der unteren Fläche der Platte (11) angeordnet sind, um die Zentrierung der Platte (11) in dem Chassis (34) bei ihrer Anordnung in dem Chassis (34) zu gestatten, wobei jede Führung (39) von einer Platte gebildet wird, deren eine schmale Seite (39a) als Zentrierungs-Anschlag an einer der beiden Seitenwände (34a, 34b) des Chassis (34) dient.

## Claims

1. Device for cutting workpieces such as tiles, comprising a stand (1) with an upper part describing a tray (11) on which workpieces to be cut can slide and a cutting unit (2) positioned beneath the said tray, the said cutting unit, fitted pivoting on the said stand, comprising a motor and a cutting tool (9) an upper part of which passes through a slot (25) in the said tray to come into contact with the workpiece to be cut, the said cutting device also comprising an enclosure (4) describing a compartment open at the top and containing a wetting fluid in which a lower part of the said cutting tool (9) is immersed, **characterised in that** the said enclosure (4) is suspended, on the one hand, on the said cutting unit (2) and, on the other hand, on the said stand (1) by means of a swinging support (29) forming a deformable quadrilateral, the first fixed vertex (20) of which coincides with the axis of pivot of the said cutting unit (2), a second fixed vertex (21) is positioned on the said stand aligned horizontally with the said first fixed vertex (20), a first moving vertex (8) moves with a lower part of the said cutting unit (2) and a second moving vertex (22) is positioned on the said enclosure aligned horizontally with the said first moving vertex.

2. Cutting device according to Claim 1, **characterised in that** the said quadrilateral is a parallelogram.

3. Cutting device according to Claim 1 or 2, **characterised in that** the said first fixed vertex (20) and the said first moving vertex (8) of the said swinging support (29) are located in the plane of the said cutting tool (9).

4. Cutting device according to Claim 3, **characterised in that** the axis of pivot of the first moving vertex (8) is tangent to the periphery of the cutting tool (9).

5. Cutting device according to one of the preceding claims, **characterised in that** the said enclosure (4) is connected by a pivot connection (8) to the said cutting unit (2) and is suspended by means of hinged connecting rods (10) to the said stand (1).

6. Cutting device according to any one of the preceding claims, **characterised in that** the said enclosure (4) is fitted detachably to the said stand (1) and to the said cutting unit (2).

7. Cutting device according to any one of the preceding claims, **characterised in that** the said enclosure (4) is fixed to the said swinging support (29) by means of studs (6) positioned on the said enclosure (4) interacting with seatings (7) located on the said swinging support, each of the said seatings being elongated in shape describing, to each side of a bend, a closed end forming a support for the corresponding stud and an open end allowing for the release of the said stud.

8. Cutting device according to any one of the preceding claims, **characterised in that** it also includes a protective enclosure (3), open top and bottom, fitted detachably to the said cutting unit (2) in order to surround a part of the said cutting tool (9) in order to form a screen to catch projections of wetting fluid and redirect them towards the said compartment containing the wetting fluid.

9. Cutting device according to any one of the preceding claims, **characterised in that** the said tray (11) includes grooves (12) extending in parallel, at regular spacings, in the direction of cutting, and a means for guiding the cutting (13, 16, 17) comprising a face (26) against which a workpiece to be cut may be rested is installed in one of the said grooves.

10. Cutting device according to Claim 9, **characterised in that** the said cutting guidance means includes a first elongated bar (13) designed to be fixed along one of the said grooves (12) and a second elongated bar (16) comprising a face (26) against which a workpiece to be cut may be rested, the said first and second bars being connected by two parallel hinged connecting rods (17).

11. Cutting device according to Claim 10, **characterised in that** the length of the said (17) connecting rods is such that the width of the space between the said first (13) and second (16) bars corresponds to at least the distance between two grooves (12).

12. Cutting device according to Claim 10 or 11, **characterised in that** the said first bar is fixed in one of the said grooves by means of clampable clip (14) and positioning pins.

13. Cutting device according to any one of Claims 10 to 12, **characterised in that** the assembly formed by the said first (13) and second (16) bars and by the said connecting rods (17) is held in a given position by means of wing screws (18).

14. Cutting device according to any one of the preceding claims, the said cutting device being fitted to a frame (34) of a table (30) holding a tray (11), **characterised in that** the tray (11) is fitted with at least one pair of clamping devices (40) designed to make the tray (11) detachable in relation to the frame (34), each camping device (40) comprising a catch (42) fitted sliding in a bearing (36) formed in the lower face of the tray (11) so that the said catch (42) can adopt all positions between a locked position whereby a free end (42a) of the said catch (42) can project from an end face (36a) of the bearing (36) to be seated respectively in an opening (35a) in a lug (35) formed in the upper part of the said frame (34), and an unlocked position whereby the said free end (42a) is retracted into the end face (36a) of the said bearing (36).

15. Cutting device according to the preceding claim, **characterised in that** the planes formed by the end faces (36a) and the lugs (35) intersect in a generating line located in a median plane of the frame (34) when the tray (11) is assembled with the frame (34).

16. Cutting device according to one of Claims 14 or 15, **characterised in that** the catch (42) is held in locked position by a spring (44) seated in a recess (37) in the bearing and acting against a stop (45) on the said catch (42).

17. Cutting device according to one of Claims 14 to 16, **characterised in that** the catch (42) is positioned in rotation in the bearing (36) by a pin (46) fitted radially in the said catch (42) and designed to slide in a longitudinal groove (38) in the bearing (36).

18. Cutting device according to one of Claims 14 to 17, **characterised in that** guides (39) are formed respectively on the lower face of the tray (11) in order to allow for the tray (11) to be centred in the frame (34) during assembly in the said frame (34), each guide (39) comprising a plate, one edge of which (39a) acts as a centring stop on one of the two side walls (34a, 34b) of the frame (34).
